# DEMANDE DE BREVET EUROPEEN

(11) **EP 2 484 212 A1**
(43) Date de publication de la demande: **08.08.2012**
(21) Numéro de dépôt: 12153681.7
(22) Date de dépôt: 02.02.2012
(51) Int. Cl.: A21B 3/07

(54) **Enfourneur automatique**

(30) Priorité: 04.02.2011 FR 1150907
(71) Demandeur: Hecht, Jean-Louis, 57470 Hombourg-Haut (FR); Hecht, Jean-Claude, 7520-409 Porto Covo- Sines (PT)
(72) Inventeur: Hecht, Jean-Louis, 57470 Hombourg-Haut (FR); Hecht, Jean-Claude, 7520-409 Porto Covo- Sines (PT)
(74) Mandataire: Vièl, Frédérique

(57) **Abrégé**

L'invention concerne un enfourneur automatique muni de moyens pour saisir un produit à enfourner, de moyens pour déplacer le produit ainsi saisi pour le déposer dans un four ainsi que d'une unité de commande, **caractérisé**
- par un châssis (100),
- par un chargeur (200) mobile par rapport au châssis (100) entre une position rétractée et une position sortie, et
- par un déchargeur (301, 303, 304) mobile par rapport au chargeur (200) entre une position rétractée et une position sortie,
- un premier moyen d'entraînement étant prévu pour déplacer le chargeur (200) par rapport au châssis (100) entre ses deux positions extrêmes,
- le chargeur étant muni, sur sa face avant dirigée vers le four, de moyens de préhension (201),
- le déchargeur étant muni d'un poussoir (301),
- un deuxième moyen d'entraînement étant prévu pour déplacer le poussoir (301) au-dessus des moyens de préhension (201) du chargeur entre sa position rétractée située à proximité de l'extrémité arrière desdits moyens de préhension (201) et sa position sortie située à proximité de l'extrémité avant desdits moyens de préhension.

## Description

L'invention concerne un enfourneur automatique muni de moyens pour saisir un produit à enfourner, de moyens pour déplacer le produit ainsi saisi afin de le déposer dans un four, ainsi que d'une unité de commande.

Les distributeurs de produits prêts à consommer trouvent de plus en plus d'utilisation. Ces distributeurs peuvent distribuer des produits prêts à consommer qu'ils stockent, comme par exemple les distributeurs de pain des documents FR 2 614 714 A1 et EP 0 368 699 A1. Ces distributeurs automatiques stockent des baguettes prêtes à la consommation dans des compartiments ou sur des tôles situées dans un magasin de stockage. À la demande, par exemple suite à l'introduction de monnaie dans le distributeur, un pain est prélevé du dispositif de stockage et il est transporté dans un réceptacle d'où il peut être pris par l'utilisateur. Or, le pain ne supporte pas d'être stocké plus de quelques heures, sans quoi, en fonction des conditions climatiques, il sèche ou au contraire il se ramollit. Ces distributeurs nécessitent de stocker le pain déjà cuit pendant un certain temps, de sorte qu'il faut soit fréquemment approvisionner le distributeur (plusieurs fois par jour), soit prendre le risque de proposer du pain d'une qualité inférieure après quelques heures de stockage. De plus, il se produit une perte importante due au rebut de pains invendus dans le délai fixé pour le respect des conditions d'hygiène et de qualité.

Ces distributeurs ont été améliorés en leur donnant la possibilité de cuire le produit offert à la vente, ou tout du moins d'en finir la cuisson. C'est ainsi que l'on connaît du document FR 2 821 524 A1 un automate qui stocke des baguettes précuites avant de les transporter dans un four pour finir la cuisson et de les conserver sur des étagères jusqu'à leur distribution. Cet automate est donc équipé d'un four automatique muni d'un convoyeur interne. Une noria prélève les baguettes précuites d'une étagère et les dépose par gravité sur une glissière qui pénètre dans le four. Les baguettes pénètrent donc sans contrôle dans le four. Il est courant qu'elles roulent sur la glissière de sorte qu'elles se retrouvent avec leur face supérieure sur le convoyeur du four et leur face inférieure dirigée vers le haut. La cuisson finale ne se fait donc pas dans des conditions idéales et l'aspect de la baguette ainsi obtenue n'est pas conforme aux attentes des consommateurs. De plus, le point de chute de la baguette précuite sur le convoyeur du four détermine la durée de son passage dans le four et donc de son temps de cuisson. Ce point de chute étant très aléatoire lorsque la baguette est ainsi projetée dans le four, certaines baguettes sont trop cuites, d'autres pas assez. Il est donc difficile d'obtenir des pains d'une qualité homogène.

Du document EP 0 708 421 A1, on connaît un système pour la production semi-continue et la vente pour consommation immédiate de produits tels que des pizzas. Dans une première station, les pizzas à enfourner sont préparées sur un plateau posé sur un support à roulettes. Ensuite l'ensemble plateau/support à roulettes est introduit dans une deuxième station constituée par un four où il reste immobile le temps nécessaire à la cuisson des pizzas. Enfin, l'ensemble est sorti du four pour entrer dans une troisième station où les pizzas sont vendues. Cet automate d'une part nécessite que les produits à enfourner soient placés sur un plateau monté sur un support à roulette, et d'autre part impose une cuisson par charge des pizzas, sans qu'il soit possible de procéder à une cuisson en continu. Dans le document US 6,065,390, des pâtons disposés sur un tapis roulant sont déposés dans des moules par gravité.

Du document EP 0 337 836 A1 on connaît un automate distributeur de hamburger. Cet automate assure lui-même la cuisson des steaks, le chauffage des demi-pains, la distribution des sauces, l'emballage des hamburgers prêts à consommer et leur vente. Les steaks crus (fraîchement reconstitués par l'automate à partir de viande hachée ou stockés déjà formés frais ou congelés) sont transférés de la zone de stockage au four à l'aide de deux convoyeurs alignés dont le premier au moins est de type tapis roulant. Au niveau de la jonction entre les deux convoyeurs, le premier redescend en parcourant un arc de cercle, tandis que le second remonte à la hauteur du premier en parcourant également un arc de cercle. Il se forme donc sur une certaine longueur une discontinuité du support. Cela ne pose pas de problèmes majeurs si le produit à convoyer est suffisamment rigide et si ses dimensions sont nettement supérieures aux dimensions de la discontinuité. Par contre si le produit ne présente pas une rigidité suffisante ou s'il est collant, sa partie avant va suivre la chute du premier convoyeur avant de se faire rouler ou déchiqueter par la remontée du second. Ce sera le cas par exemple d'une pizza précuite. Dans le cas où les dimensions du produit convoyé sont trop faibles, celui-ci va chuter dans le creux situé à l'interface entre les deux convoyeurs et il risque de ne pas pouvoir remonter sur le second convoyeur. Ce sera le cas par exemple d'une baguette placée transversalement sur les convoyeurs.

Le document EP 1 820 400 A2 divulgue un enfourneur semi-automatique constitué d'un chargeur pouvant entrer dans un four. Cet enfourneur est couvert d'un tapis roulant. L'enfourneur est tout d'abord placé hors du four et l'opérateur dépose les pains à cuir sur le tapis roulant. L'enfourneur est ensuite déplacé jusque dans le fond du four. Dans un mouvement simultané, l'enfourneur est ensuite déplacé en direction de la sortie tandis que le tapis roulant est déplacé sur l'enfourneur à contresens, c'est-à-dire en direction du fond du four. Les pains à cuire sont ainsi déposés les uns derrière les autres sur la sole du four. Après la cuisson, l'enfourneur est entré progressivement dans le four avec le tapis roulant se déplaçant en contresens, c'est-à-dire en direction de la porte du four. Les pains cuits sont ainsi remontés les uns après les autres sur le tapis roulant. Lorsque le chargeur a atteint le fond du four, une trappe est fermée et le chargeur est ressorti du four. L'enfourneur est placé sur un cadre vertical de sorte qu'il peut monter et descendre pour charger et décharger différents fours placés les uns au dessus des autres. Cet enfourneur permet de déposer sur la sole du four des pains à cuire, il permet également de remettre sur le tapis roulant les pains cuits. Cependant, il ne permet pas de charger des pains avant cuisson : il faut les poser manuellement dessus. Par ailleurs, si l'enfourneur arrive à charger les pains après cuisson, cela est dû au fait que ces pains cuits ne sont pas collants. Il n'arriverait pas à charger des produits collants tels que des pâtons crus ou semi-cuits. Enfin, ce chargeur n'est pas en mesure de charger des pains de type baguette, car ceux-ci rouleraient vers le fond du four au fur et à mesure de l'avancement du chargeur.

L'objectif de la présente invention est de proposer un enfourneur automatique qui évite les inconvénients précités. Il doit permettre de prélever d'un présentoir un produit cru ou précuit et de l'enfourner en un endroit bien précis du four. Cet enfourneur devra être apte à prélever aussi bien des produits plats tels que des pizzas ou des tartes que des produits cylindriques tels que des pains longs ou des baguettes. Pour cela, il faut empêcher les produits cylindriques de pivoter sur leur axe pour assurer un positionnement fiable du produit avec sa face supérieure dirigée vers le haut. L'enfourneur devra de préférence être capable de prélever un ou plusieurs produits simultanément.

Cet objectif est atteint conformément à l'invention du fait que l'enfourneur automatique est muni
- d'un châssis,
- d'un chargeur mobile par rapport au châssis entre une position rétractée et une position sortie, et
- d'un déchargeur mobile par rapport au chargeur entre une position rétractée et une position sortie,
- un premier moyen d'entraînement étant prévu pour déplacer le chargeur par rapport au châssis entre ses deux positions extrêmes,
- le chargeur étant muni, sur sa face avant dirigée vers le four, de moyens de préhension,
- le déchargeur étant muni d'un poussoir,
- un deuxième moyen d'entraînement étant prévu pour déplacer le poussoir au-dessus des moyens de préhension du chargeur entre sa position rétractée située à proximité de l'extrémité arrière desdits moyens de préhension et sa position sortie située à proximité de l'extrémité avant desdits moyens de préhension.

Avec un tel enfourneur, il est possible de saisir un produit déposé sur un présentoir à l'aide des moyens de préhension en faisant avancer le chargeur, le poussoir étant en position rétractée, d'avancer encore le chargeur à l'intérieur du four jusqu'au dessus d'un point déterminé, de déplacer vers l'intérieur du four le poussoir par rapport aux moyens de préhension pour pousser le produit saisi hors des moyens de préhension et ainsi le déposer à l'emplacement prévu dans le four.

Dans un mode simple de réalisation de l'invention, les moyens de préhension sont constitués d'une pluralité de dents plates horizontales et parallèles entre elles. L'extrémité arrière de ces dents est de préférence fixée sur l'arête inférieure d'une butée verticale. Cette dernière peut être elle-même fixée à l'extrémité avant d'un support pouvant pénétrer en partie au moins dans le châssis ou étant placé en partie au moins sur ou sous ledit châssis. Lors du fonctionnement, les dents glissent de préférence à la surface du présentoir sur laquelle repose l'objet à enfourner ou se déplacent juste au-dessus. De même, lors de la dépose dans le four, ces dents reposent sur la sole du four ou sur le convoyeur du four ou sont situées juste au-dessus.

Il est préférable que le moyen d'entraînement pour déplacer le chargeur par rapport au châssis soit constitué par un moteur électrique. C'est une solution à la fois simple et économique.

Dans un mode simple de réalisation de l'invention, le poussoir du déchargeur est fixé aux extrémités avant de deux tringles, une plaque arrière étant fixée aux autres extrémités des deux tringles.

Il est préférable d'une part que les moyens de préhension du chargeur soient fixés, par leur côté opposé au four, sur une butée avant placée à l'extrémité avant d'un support, une butée arrière étant prévue à l'autre extrémité du support, et d'autre part que les tringles soient dimensionnées de telle sorte d'une part que, lorsque le déchargeur est en position rentrée, le poussoir du déchargeur soit en contact avec la butée avant du chargeur en étant placé devant elle et la plaque arrière du déchargeur se situe derrière et à distance de la butée arrière du chargeur et d'autre part que, lorsque le déchargeur est en position sortie, la plaque arrière du déchargeur soit en contact avec la butée arrière du chargeur en étant placée derrière elle et le poussoir du déchargeur se situe à proximité de l'extrémité avant des moyens de préhension, devant et à distance de la butée avant.

Il est possible d'éviter la présence d'un deuxième moteur pour entraîner le déchargeur par rapport au chargeur. On peut par exemple prévoir des moyens de retenue constitués d'un premier dispositif de retenue fixé sur le déchargeur, de préférence sur la plaque arrière, et d'un deuxième dispositif de retenue fixé sur le châssis. Dans ce cas, le premier et le deuxième dispositifs de retenue coopèrent de telle sorte que lorsque le premier dispositif de retenue est placé derrière le deuxième dispositif de retenue, considéré par rapport au mouvement du chargeur,
i d'une part, le deuxième dispositif de retenue retient le premier dispositif de retenue en empêchant le déchargeur de suivre le mouvement du chargeur lorsque celui-ci se déplace et que la butée avant du chargeur n'est pas en butée avec le poussoir du déchargeur et la butée arrière du chargeur n'est pas en butée avec la plaque arrière du déchargeur, et
i i d'autre part, le premier et le deuxième dispositifs de retenue cessent de coopérer lorsque le chargeur avançant en direction du four la butée avant du chargeur vient en butée avec le poussoir du déchargeur ou lorsque le chargeur s'éloignant du four, la butée arrière du chargeur vient en butée avec la plaque arrière du déchargeur.

Il faut comprendre ici que le chargeur n'entraîne le déchargeur en surmontant l'effet des moyens de retenue que lorsque sa butée avant ou sa butée arrière est « en butée » contre le poussoir ou la plaque arrière du déchargeur respectivement. Cela signifie que cet entraînement n'a lieu lorsque le chargeur se déplace vers le four que si sa butée avant appuie sur le poussoir, mais pas si sa butée arrière est en contact avec la plaque arrière du déchargeur. De même, lorsque le chargeur s'écarte du four, il n'entraîne le déchargeur que si sa butée arrière appuie sur la plaque arrière du déchargeur, mais pas si sa butée avant est en contact avec le poussoir.

Dans un mode simple de réalisation, le premier dispositif de retenue comprend au moins un support muni d'une bille soumise à la pression d'un ressort, de préférence deux supports placés de telle sorte que leurs billes se regardent et soient placées sur un axe perpendiculaire à la direction du mouvement du déchargeur. Le deuxième dispositif de retenue comprend au moins un doigt, de préférence deux, placé dans le chemin parcouru par la ou les billes.

Dans une alternative de réalisation de l'enfourneur, le premier dispositif de retenue comprend au moins un support muni d'un aimant de déchargeur et le deuxième dispositif de retenue comprend au moins un aimant de châssis placé dans ou le long du chemin parcouru par l'aimant de déchargeur. Dans un mode de réalisation privilégié de l'invention, le deuxième dispositif de retenue comprend deux aimants de châssis placés dans ou le long du chemin parcouru par l'aimant de déchargeur. Ces deux aimants de châssis peuvent être placés aux deux extrémités du chemin parcouru par l'aimant de déchargeur et servir ainsi de butées.

Afin de permettre la saisie de baguettes en empêchant qu'elles ne roulent sur elles-mêmes sur les moyens de préhension lors de leur chargement ou de leur déchargement, il est préférable de munir le chargeur de moyens de stabilisation placés au-dessus des moyens de préhension pour empêcher le produit à enfourner de rouler sur les moyens de préhension. On pourra prévoir des moyens de réglage pour régler la distance verticale entre les moyens de stabilisation et les moyens de préhension et/ou pour régler l'inclinaison des moyens de stabilisation par rapport aux moyens de préhension. On pourra ainsi adapter les moyens de stabilisation à la hauteur des produits à enfourner, notamment en fonction du diamètre des pains cylindriques. Dans un mode simple de réalisation, les moyens de stabilisation sont constitués par une ou plusieurs tiges dirigées vers l'avant, parallèles aux moyens de préhension ou inclinées par rapport aux moyens de préhension de telle sorte que leurs extrémités avant soient plus élevées que leurs extrémités arrière. Afin de permettre au poussoir une certaine hauteur, il est possible de réaliser des ouvertures dans le poussoir pour laisser passer les moyens de stabilisation.

Dans un mode particulier de réalisation de l'invention, un présentoir est placé entre le chargeur placé en position rétractée et le four.

L'invention est décrite plus en détail ci-dessous à l'aide des figures suivantes qui montrent :
- Figure 1 :: une vue en perspective d'un enfourneur automatique selon l'invention, le chargeur en position rétractée, le déchargeur en position sortie ;
- Figure 2 :: une vue en perspective de l'enfourneur de la figure 1, le chargeur en position sortie, le déchargeur en position rétractée ;
- Figure 3 :: une vue de dessus de l'enfourneur dans la position de la figure 1 ;
- Figure 4 :: une vue en coupe longitudinale de l'enfourneur dans la position de la figure 1 ;
- Figure 5 :: une vue de dessus de l'enfourneur dans la position de la figure 2 ;
- Figure 6 :: une vue en coupe longitudinale de l'enfourneur dans la position de la figure 2 ;
- Figure 7 :: une vue agrandie (a) du déchargeur de la figure 4, (b) du déchargeur de la figure 6, des détails (c) et (d) de la figure 4 ;
- Figure 8 :: une vue en perspective du déchargeur de l'invention;

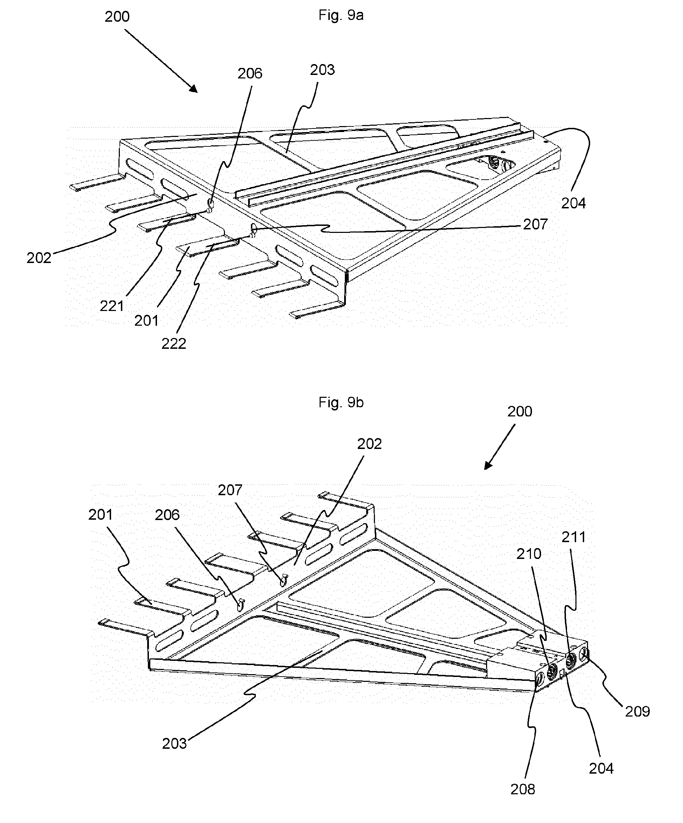

- Figure 9 :: une vue en perspective (a) du dessus et (b) du dessous du chargeur de l'invention.

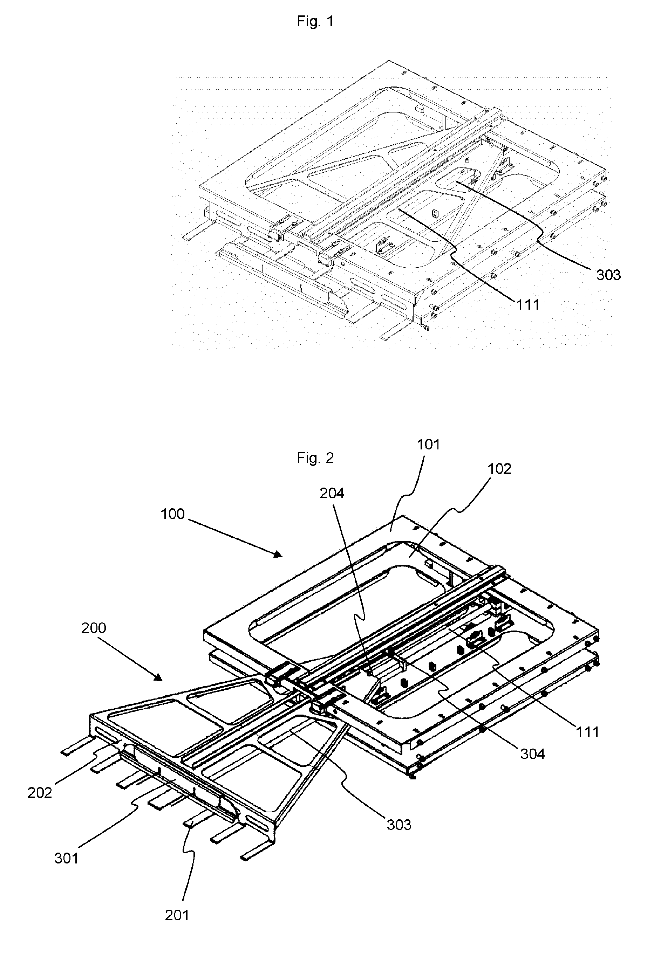

Pour des raisons de simplification, les références spatiales (avant/arrière, horizontal/vertical, etc.) sont faites par rapport à un enfourneur placé en position de travail, face à l'entrée d'un four. Sur les figures, il faut s'imaginer que le four se situe à gauche de l'enfourneur. Le présentoir sur lequel repose le produit à enfourner serait, quant à lui, placé entre l'enfourneur en position rétracté comme sur la figure 1 et le four.

L'enfourneur automatique de l'invention est constitué de trois parties principales, à savoir un châssis fixe (100), un chargeur (200) et un déchargeur (300).

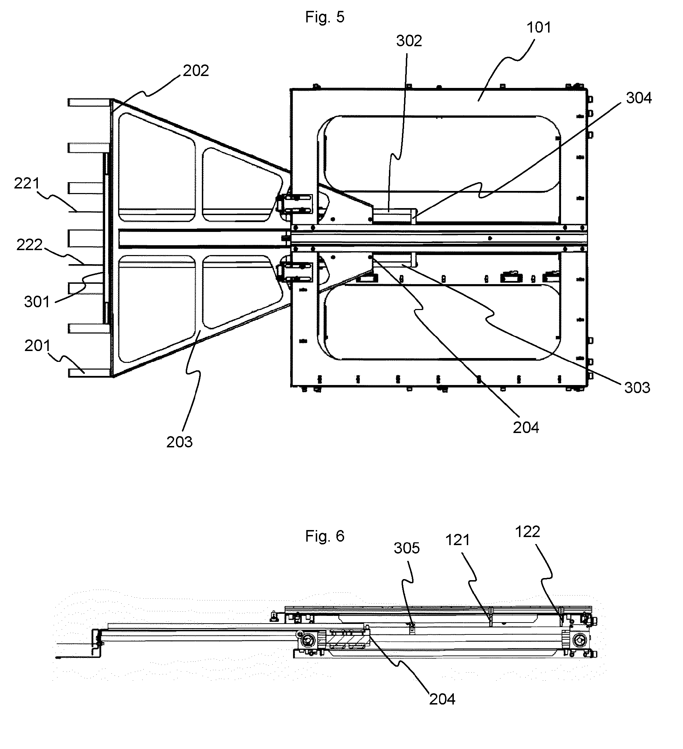

Le chargeur (200) est mobile par rapport au châssis (100) et peut se déplacer entre une position rétractée visible sur les figures 1, 3 et 4 et une position sortie visible sur les figures 2, 5 et 6. Le déplacement du chargeur (200) par rapport au châssis (100) est effectué par un moteur électrique (205).

Le déchargeur (300) est mobile par rapport au chargeur (200) et peut se déplacer entre une position rétractée (par rapport au chargeur) visible sur les figures 2, 5, 6 et 7b, et une position sortie (par rapport au chargeur) visible sur les figures 1, 3, 4 et 7a. Le déplacement relatif du déchargeur (300) par rapport au chargeur (200) est effectué par un système de retenue décrit plus loin. De plus, le déchargeur (300) peut être entraîné par frottement par le chargeur (200) de sorte que les deux pièces, dans certaines conditions, se déplacent ensemble.

Le cadre fixe (100) est constitué de deux plaques ajourées (101, 102) superposées.

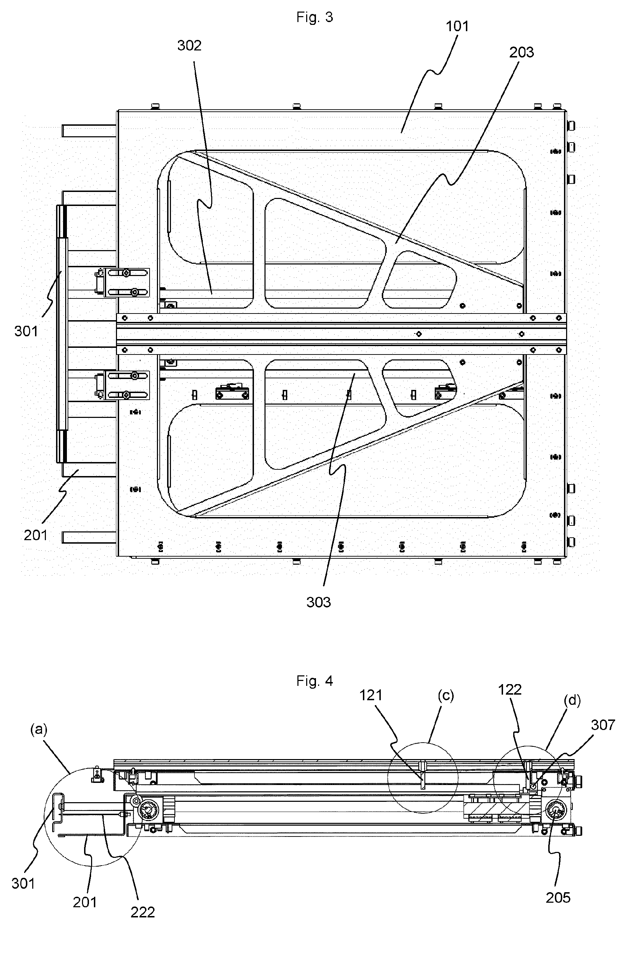

Le chargeur (200) est constitué de sept dents plates (201) horizontales, parallèles entre elles, fixées par l'une de leurs extrémités sur l'arête inférieure d'une butée verticale (202) qui se trouve à l'extrémité d'un cadre (203). À l'opposé de la butée verticale (202), l'autre extrémité du cadre forme une butée (204) parallèle à la butée avant verticale (202). En position rétractée du chargeur (voir par exemple les figures 1 et 3), le cadre (203) pénètre dans le châssis (100), tandis que les dents (201) restent à l'extérieur du châssis (100). En position sortie, le cadre (203) saille en grande partie hors du châssis (100) comme le montre notamment la figure 2, son extrémité arrière portant la butée (204) restant à l'intérieur du châssis (100).

Le chargeur (200) coulisse sur deux rails (111) dont seul un est visible sur les figures 1 et 2. Les rails (111) passent à l'intérieur d'orifices (210, 211) réalisés dans le chargeur.

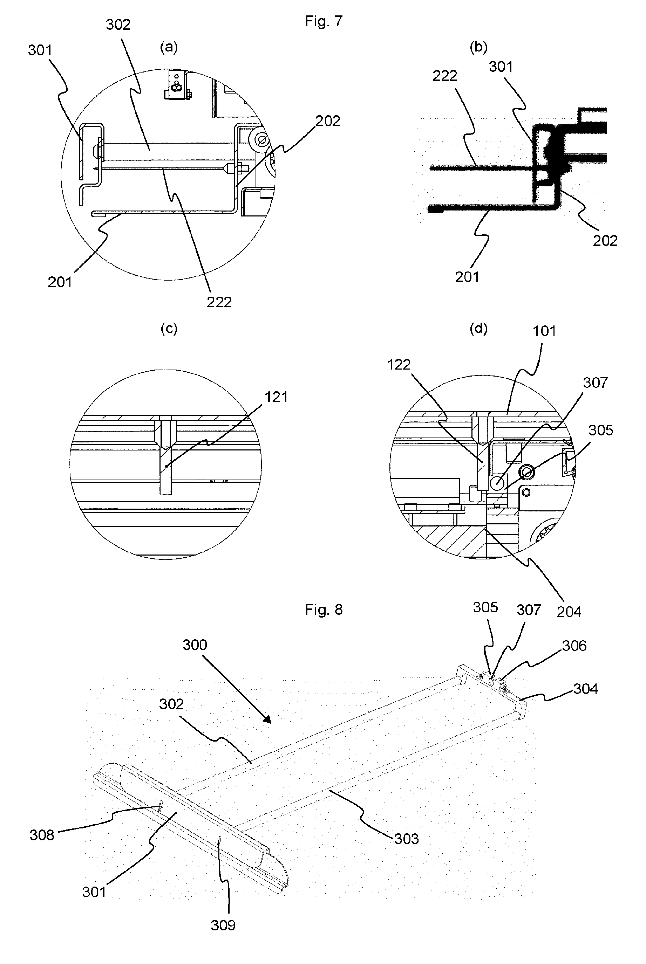

Le chargeur (200) est en outre muni de moyens de stabilisation constitués de deux tiges (221, 222) placées au-dessus des dents (201) et dont l'une des extrémités est fixée à la butée verticale (202). Ces tiges de stabilisation (221, 222) sont dirigées vers l'avant, comme les dents (201), et peuvent être horizontales comme dans l'exemple présenté ici (voir notamment les figures 7a et 7b), ou bien être légèrement inclinées de sorte que leur extrémité libre (à gauche sur les figures 7a et 7b) soit légèrement plus haute que leur extrémité fixée sur la butée verticale (202).

Le déchargeur (300) est constitué d'un poussoir vertical (301) fixé à l'extrémité de deux tringles (302, 303) parallèles. Ces tringles (302, 303) traversent la butée verticale (202) du chargeur par les orifices (206, 207). Leurs extrémités arrière dépassent la face arrière (204) du cadre (203) formant butée en passant par les orifices (208, 209) du chargeur et sont reliées entre elles par une plaque arrière (304). Le poussoir (301) est muni de deux ouvertures (307, 308) à travers lesquelles passent les deux tiges de stabilisation (221, 222) lorsque le poussoir quitte sa position de sortie. Afin de permettre un réglage en hauteur et/ou l'inclinaison de moyens de stabilisation (221, 222), les ouvertures (307, 308) ont de préférence la forme de fentes verticales.

Un dispositif de retenue est placé sur la plaque arrière (304). Ce dispositif de retenue est constitué de deux supports verticaux (305, 306) et portant chacun une bille (307) sur ressort dont seule une est visible. Les deux billes (307) sont placées sur un axe horizontal perpendiculaire au mouvement de va-et-vient du poussoir. Elles se font face. Deux cales ayant la forme de doigts verticaux (121, 122) sont fixées sur la plaque supérieure (101) du châssis, dirigées vers le bas. Le dispositif de retenue et les doigts sont dimensionnés de telle sorte que lors du déplacement du déchargeur, les billes (307) viennent buter contre l'un ou l'autre doigt (121, 122) de sorte que le mouvement relatif du déchargeur (300) par rapport au châssis est provisoirement bloqué. Si une force suffisante est exercée, alors les billes (307) s'enfoncent contre l'effet du ressort de poussé, et le déchargeur (300) peut continuer sa course au-delà du doigt qui l'avait retenu jusque-là.

Plutôt qu'un système doigts/dispositif de retenue à billes, on peut prévoir de placer un aimant sur un support de la plaque arrière (304) du déchargeur et deux aimants sur la plaque supérieure (101) du châssis. L'aimant du déchargeur (300) et les deux aimants du châssis (100) sont placés de telle sorte que lors du déplacement du déchargeur, l'aimant du déchargeur (300) arrive en face de l'un ou l'autre des aimants du châssis (100) de sorte que le mouvement relatif du déchargeur (300) par rapport au châssis est provisoirement bloqué. Les aimants de châssis peuvent être placés le long de la course de l'aimant de déchargeur, permettant ainsi à ce dernier d'aller au-delà des deux aimants de châssis. Si une force suffisante est exercée, la force de retenue exercée par les deux aimants est dépassée, et le déchargeur (300) peut continuer sa course en quittant l'aimant qui l'avait retenu jusque-là. Il est également possible de placer les deux aimants de châssis aux deux extrémités de la course de l'aimant du déchargeur en formant deux butées. Dans ce cas, le déchargeur ne peut pas aller au-delà des positions atteintes par son aimant lorsqu'il vient buter contre les aimants du châssis.

L'enfourneur de l'invention fonctionne de la façon suivante:
Au début du cycle, le chargeur (200) est placé en position rétractée, le déchargeur (300) étant en position sortie (il pourrait tout aussi bien être en position rétractée). C'est la position présentée aux figures 1, 3, 4 et 7a et 7d. Dans cette position, le dispositif de retenue (305, 306) du déchargeur est placé derrière (c'est-à-dire à droite sur les figures) le premier doigt (122) situé le plus en arrière, comme le montrent les figures 4 et 7d, ou derrière l'aimant du châssis situé le plus en arrière. Il n'est pas nécessaire que le dispositif de retenue du déchargeur soit très éloigné du premier doigt. Il suffit qu'il soit juste derrière le doigt, ou que l'aimant du déchargeur soit en butée contre l'aimant arrière du châssis.

Un produit devant être enfourné dans un four non représenté est placé sur un présentoir situé en avant des dents (201) du chargeur et du poussoir (301) du déchargeur. Le moteur (205) est mis en marche et le chargeur (200) commence à avancer vers l'avant (c'est-à-dire vers la gauche sur les figures 3 et 4). Dans un premier temps, le déchargeur (300) reste dans sa position initiale, retenu par le premier doigt (122) ou par le premier aimant du châssis. Après avoir suffisamment avancé, la butée verticale (202) du chargeur vient buter contre le poussoir (301) du déchargeur. Cela correspond à la position représentée à la figure 7b. La poussée exercée par cette butée verticale (202) sur le déchargeur (300) est supérieure à la force de retenue des billes (307) du système de retenue (305, 306) du déchargeur (ou à la force de retenue des aimants) : le déchargeur est donc entraîné vers l'avant avec le chargeur. Les dents (201) du chargeur passent en dessous du produit. Celui-ci est bloqué en translation vers l'avant par une butée non représentée et qui peut être constituée par la porte du four. Parallèlement, les tiges de stabilisation (221, 222) saisissent l'aliment par le dessus, l'empêchant ainsi de pivoter sur son axe et de rouler sur les dents (201). Le produit à enfourner se trouve donc placé entre les dents (201) et les tiges de stabilisation (221, 222), devant le poussoir (301) du déchargeur qui se trouve en position rétractée.

À ce stade, le mouvement d'avance du chargeur peut être arrêté, par exemple par butée des dents (201) sur la porte du four. Le chargeur peut être légèrement reculé, entraînant avec lui le déchargeur et la porte du four est ouverte. Le chargeur (200) reprend (ou continue) sa course vers l'avant, entraînant avec lui le déchargeur dont le poussoir (301) est en butée contre la butée verticale (202) du chargeur. Le système de retenue du déchargeur passe le deuxième doigt (121) ou le deuxième aimant du châssis sans arrêter le déchargeur qui est poussé par le chargeur. En principe, il suffit que la course du chargeur s'arrête dès que le système de retenue du déchargeur est passé au-delà du deuxième doigt (121), c'est-à-dire qu'il se trouve à gauche de celui-ci ou qu'il ait atteint le deuxième aimant de châssis (le cas échéant en venant en butée contre lui). Un capteur peut déterminer cette position. Sur les figures 2, 5 et 6, le chargeur est représenté en position totalement sortie, bien au-delà du point d'arrêt de la course du chargeur lors du fonctionnement réel du dispositif. En pratique, la position du deuxième doigt (121) ou du deuxième aimant détermine la position d'avancement maximum du chargeur lors du fonctionnement normal. Dans cette position, le produit à enfourner se trouve dans sa position d'enfournement ou légèrement en avant de cette position.

Le moteur (205) du chargeur est alors mis en marche arrière, provoquant le déplacement vers l'arrière (c'est-à-dire vers la droite sur les figures) du chargeur avec ses doigts (201) et ses tiges de stabilisation.

Si comme cela est représenté sur les figures 2, 5 et 6, le chargeur est dans une position telle que le système de retenue du déchargeur n'est pas en contact avec le deuxième doigt (121) ou en face du deuxième aimant de châssis, alors le déchargeur est tout d'abord entraîné par frottement dans ce mouvement de recul jusqu'à ce que le système de retenue (305, 306, 307) bute sur le deuxième doigt (121) ou que l'aimant du déchargeur coopère avec le deuxième aimant de châssis.

Dès que le système de retenue (305, 306, 307) est en buté sur le deuxième doigt (121) ou que l'aimant du déchargeur coopère avec le deuxième aimant du châssis, soit directement après la course d'avancée, soit après recul du chargeur, le déchargeur (300), et notamment le poussoir (301), se trouve retenu tandis que le chargeur, et avec lui les dents (201) et les tiges de stabilisation (221, 222), continuent de reculer. Le poussoir entre alors en contact avec le produit retenu entre les dents et les tiges de retenue, l'empêchant de suivre le mouvement de recul : il pousse donc le produit hors du chargeur, jusqu'à ce qu'il se pose dans le four. Toujours coincé entre les dents (201) et les tiges de stabilisation (221 , 222) durant le mouvement de poussée, le produit conserve son orientation spatiale durant tout ce mouvement de déchargement, c'est-à-dire qu'il ne roule pas sur les dents et sa face supérieure reste bien orientée vers le haut. Comme on le voit, le déchargeur et notamment le poussoir ne bougent pas par rapport au châssis durant l'opération de dépose du produit dans le four. Autrement dit, le produit ne bouge pas non plus par rapport au châssis et donc à la sole du four dès qu'il entre en contact avec le poussoir (301). Le déchargeur (300) n'est reculé qu'une fois cette opération terminée.

Le déchargeur (300) est dimensionné pour qu'au moment où le poussoir (301) se trouve à proximité des extrémités avant des dents (201), la butée arrière (204) du cadre du chargeur vienne en contact avec la plaque arrière (304) du déchargeur. Le chargeur (200) entraîne alors avec lui le déchargeur (300), forçant le système de retenue (305, 306, 307) à passer le deuxième doigt (121) ou l'aimant du déchargeur à quitter l'aimant de châssis situé à l'avant. Juste avant la fin de la course de rétractation du chargeur, le système de retenue du déchargeur passe le premier doigt (122) ou l'aimant du déchargeur se trouve en face du premier aimant de châssis sans arrêter le déchargeur qui est tiré par le chargeur. Enfin, le chargeur atteint sa position extrême représentée aux figures 1, 3 et 4. Si des aimants sont utilisés, il suffit que la course s'arrête lorsque l'aimant du déchargeur se trouve en face de l'aimant du châssis situé à l'arrière, le cas échéant en butée contre lui.

Des capteurs peuvent être répartis tout au long de la course du chargeur et/ou du déchargeur pour faciliter la commande des moyens de déplacement, notamment du moteur (205).

L'enfourneur automatique de l'invention permet donc d'enfourner un produit cru ou précuit à la manière d'un boulanger ou d'un pizzaïolo, sans que le produit soit placé sur un moule ou un support qui entre dans le four.

Si l'aliment à enfourner a des proportions telles qu'il ne risque pas de basculer ou de rouler lorsque les dents (201) passent en dessous ou lorsqu'il est repoussé par le poussoir, il est possible de renoncer aux moyens de stabilisation. Ce sera le cas par exemple des tartes ou des pizzas. Par contre pour les pains ayant une section transversale sensiblement circulaire comme les baguettes, il est recommandé d'utiliser ce type de moyens pour éviter que le pain roule sur les dents lors de son chargement et/ou de son déchargement, de sorte que la face supérieure ne se retrouve pas forcément sur le dessus. Dans une telle situation, il ne serait pas toujours possible d'obtenir une cuisson idéale du pain avec une croûte supérieure bien formée et bien croustillante.

Dans l'exemple présenté, le chargeur est déplacé à l'aide d'un moteur électrique (205). Cependant, il serait tout à fait possible que le déplacement soit commandé par d'autres moyens de déplacement, tels qu'un système de pistons.

De même, les moyens de retenue du poussoir peuvent être constitués par d'autres dispositifs que le système de retenue à bille et les doigts. On pourrait par exemple prévoir des systèmes de clenches. On pourrait également prévoir non pas un système de retenue comme dans l'exemple présenté, mais un deuxième moteur électrique.

Le présentoir peut être constitué par une plaque fixe sur laquelle l'aliment à enfourner est déposé manuellement ou automatiquement. Il peut également s'agir d'un dispositif mobile qui est chargé dans une autre zone et qui vient ensuite s'aligner sur le chargeur, à la hauteur des dents (201) de sorte que celles-ci glissent sur le dispositif mobile.

La partie du chargeur qui saisit l'aliment à enfourner n'est pas nécessairement un dispositif de type râteau avec une série de dents parallèles horizontales dirigées vers l'avant. Cette partie pourrait être constituée d'une plaque unique ou de plusieurs plaques dont les dimensions sont de préférence supérieures aux dimensions de l'objet à saisir (par exemple des pizzas ou des tartes).

L'enfourneur automatique de l'invention est de préférence prévu pour un automate muni de moyens de stockage de produits crus ou précuits, de moyens de cuissons, de moyens de stockage de produits finis et de moyens de distribution. Il peut cependant être utilisé seul, ou avec une partie seulement de ces moyens automatiques. Si l'enfourneur est prévu pour un four automatique à convoyeur et/ou pour un présentoir à convoyeur, on peut prévoir que les moyens de préhension, notamment les doigts (201) glissent non pas sur la surface des convoyeurs, mais dans des espaces prévus à cet effet dans les convoyeurs de sorte que la face supérieure des moyens de préhension de l'enfourneur affleure les convoyeurs, ou tout au plus soient légèrement au-dessus.

Le procédé décrit ci-dessus pourrait très bien être appliqué à d'autres produits que des produits alimentaires.

### Liste des références :

- 100: châssis fixe
101 plaque ajourée
102 plaque ajourée
111 RAIL
121 premier doigt de retenue
122 deuxième doigt de retenue
- 200: chargeur
201 dents
202 butée verticale
203 cadre
204 butée
205 moteur d'entraînement du chargeur
206 orifice de passage d'une tringle
207 orifice de passage d'une tringle
208 orifice de passage d'une tringle
208 orifice de passage d'un rail de guidage
209 orifice de passage d'un rail de guidage
221 tige de stabilisation
222 tige de stabilisation
- 300: déchargeur
301 poussoir vertical
302 tringle
303 tringle
304 plaque arrière
305 premier support vertical du dispositif de retenue
306 second support vertical du dispositif de retenue
307 bille
308 ouverture de passage des tiges de stabilisation
309 ouverture de passage des tiges de stabilisation

## Revendications

1. Enfourneur automatique muni de moyens pour saisir un produit à enfourner, de moyens pour déplacer le produit ainsi saisi pour le déposer dans un four ainsi que d'une unité de commande, **caractérisé**
- **par** un châssis (100),
- par un chargeur (200) mobile par rapport au châssis (100) entre une position rétractée et une position sortie, et
- par un déchargeur (300) mobile par rapport au chargeur (200) entre une position rétractée et une position sortie,
- un premier moyen d'entraînement étant prévu pour déplacer le chargeur (200) par rapport au châssis (100) entre ses deux positions extrêmes,
- le chargeur étant muni, sur sa face avant dirigée vers le four, de moyens de préhension (201),
- le déchargeur (300) étant muni d'un poussoir (301),
- un deuxième moyen d'entraînement (305, 306, 307, 121, 122) étant prévu pour déplacer le poussoir (301) au-dessus des moyens de préhension (201) du chargeur entre sa position rétractée située à proximité de l'extrémité arrière desdits moyens de préhension (201) et sa position sortie située à proximité de l'extrémité avant desdits moyens de préhension.

2. Enfourneur selon la revendication 1, **caractérisé en ce que** les moyens de préhension sont constitués d'une pluralité de dents (201) horizontales et parallèles entre elles.

3. Enfourneur selon la revendication 2, **caractérisé en ce que** l'extrémité arrière des dents (201) de l'enfourneur (200) est fixée sur l'arête inférieure d'une butée verticale (202).

4. Enfourneur selon la revendication 3, **caractérisé en ce que** la butée verticale (202) est fixée à l'extrémité avant d'un support (203) pouvant pénétrer en partie au moins dans le châssis (100) ou étant placé en partie au moins sur ou sous ledit châssis (100).

5. Enfourneur selon l'une des revendications précédentes, **caractérisé en ce que** le moyen d'entraînement pour déplacer le chargeur (200) par rapport au châssis (100) est constitué par un moteur électrique (205).

6. Enfourneur selon l'une des revendications précédentes, **caractérisé en ce que** le poussoir (301) du déchargeur est fixé aux extrémités avant de deux tringles (202), une plaque arrière (304) étant fixée aux autres extrémités des deux tringles (202).

7. Enfourneur selon la revendication précédente, **caractérisé en ce que** les moyens de préhension (201) du chargeur sont fixés, par leur côté opposé au four, sur une butée avant (202) placée à l'extrémité avant d'un support (203), une butée arrière (204) étant prévue à l'autre extrémité du support (203), et **en ce que** les tringles (202) sont dimensionnées de telle sorte d'une part que, lorsque le déchargeur (300) est en position rentrée, le poussoir (301) du déchargeur soit en contact avec la butée avant (202) du chargeur et la plaque arrière (304) du déchargeur se situe derrière et à distance de la butée arrière (204) du chargeur et d'autre part que, lorsque le déchargeur (300) est en position sortie, la plaque arrière (304) du déchargeur soit en contact avec la butée arrière (204) du chargeur et le poussoir (301) du déchargeur se situe à proximité de l'extrémité avant des moyens de préhension (201), devant et à distance de la butée avant (202).

8. Enfourneur selon la revendication précédente, **caractérisé en ce que**
- le deuxième moyen d'entraînement est conçu sous la forme de moyens de retenue constitués d'un premier dispositif de retenue (305, 306, 307) fixé sur le déchargeur (300), de préférence sur la plaque arrière (304), et d'un deuxième dispositif de retenue (121, 122) fixé sur le châssis (100),
- le premier et le deuxième dispositifs de retenue coopérant de telle sorte que lorsque le premier dispositif de retenue (305, 306, 307) est placé derrière le deuxième dispositif de retenue, considéré par rapport au mouvement du chargeur (200),
i d'une part, le deuxième dispositif de retenue retient le premier dispositif de retenue en empêchant le déchargeur (300) de suivre le mouvement du chargeur (200) lorsque celui-ci se déplace et que la butée avant (202) du chargeur n'est pas en butée avec le poussoir (301) du déchargeur et la butée arrière (204) du chargeur n'est pas en butée avec la plaque arrière (304) du déchargeur, et
ii d'autre part, le premier et le deuxième dispositifs de retenue cessent de coopérer lorsque le chargeur avançant en direction du four la butée avant (202) du chargeur vient en butée avec le poussoir (301) du déchargeur ou lorsque le chargeur s'éloignant du four, la butée arrière (204) du chargeur vient en butée avec la plaque arrière (304) du déchargeur.

9. Enfourneur selon la revendication précédente, **caractérisé en ce que** le premier dispositif de retenue comprend au moins un support muni d'une bille soumise à la pression d'un ressort, de préférence deux support (305, 306) placés de telle sorte que leurs billes (307) se regardent et soient placées sur un axe perpendiculaire à la direction du mouvement du déchargeur, et **en ce que** le deuxième dispositif de retenue comprend au moins un doigt (121, 122) placé dans le chemin parcouru par la ou les billes (307).

10. Enfourneur selon la revendication 8, **caractérisé en ce que** le premier dispositif de retenue comprend au moins un aimant, et **en ce que** le deuxième dispositif de retenue comprend au moins un aimant placé dans ou le long du chemin parcouru par l'aimant du premier dispositif de retenue, le deuxième dispositif de retenue comprenant de préférence deux aimants qui sont placés de préférence aux extrémités de la course de l'aimant du premier dispositif de retenue de sorte à former chacun une butée.

11. Enfourneur selon l'une des revendications précédentes, **caractérisé en ce que** le chargeur est muni de moyens de stabilisation (221, 222) placés au-dessus des moyens de préhension (201) pour empêcher le produit à enfourner de rouler sur les moyens de préhension lors du chargement ou du déchargement.

12. Enfourneur selon la revendication précédente, **caractérisé en ce que** des moyens de réglage sont prévus pour régler la distance verticale entre les moyens de stabilisation (211, 212) et les moyens de préhension (201) et/ou pour régler l'inclinaison des moyens de stabilisation (211, 212) par rapport aux moyens de préhension (201).

13. Enfourneur selon la revendication 11 ou 12, **caractérisé en ce que** les moyens de stabilisation sont constitués en une ou plusieurs tiges dirigées vers l'avant parallèle aux moyens de préhension ou inclinées par rapport aux moyens de préhension de telle sorte que leurs extrémités avants soient plus élevées que leurs extrémités arrières.

14. Enfourneur selon l'une des revendications 11 à 13, **caractérisé en ce que** des ouvertures sont réalisées dans le poussoir (301) pour laisser passer les moyens de stabilisation (211, 212).

15. Enfourneur selon l'une des revendications précédentes, **caractérisé en ce qu**'un présentoir (400) est placé entre le chargeur (200) placé en position rétractée et le four.
